# EUROPÄISCHE PATENTSCHRIFT

(11) **EP 4 503 524 B1**
(45) Veröffentlichungstag und Bekanntmachung des Hinweises auf die Patenterteilung: **01.10.2025**
(21) Anmeldenummer: 23188835.5
(22) Anmeldetag: 01.08.2023
(51) Int. Cl.: H04L 12/46, H04L 45/745

(54) **KONFIGURIEREN EINES RETRANSMITTERS**
CONFIGURING A RETRANSMITTER
CONFIGURATION D'UN REÉMETTEUR

(43) Veröffentlichungstag der Anmeldung: 05.02.2025
(73) Patentinhaber: ise Individuelle Software und Elektronik GmbH, 26122 Oldenburg (DE)
(72) Erfinder: OLTMANNS, Eiko, 26203 Wardenburg (DE)
(74) Vertreter: Angerhausen, Christoph

(56) Entgegenhaltungen:
- WO-A1-2015/071888
- WO-A1-2023/104350

## Beschreibung

### TECHNISCHES GEBIET

Die hier offenbarte Erfindung liegt auf dem technischen Gebiet von Retransmittern und deren Konfiguration.

### STAND DER TECHNIK

Retransmitter sind Geräte, die in einem drahtlosen Netzwerk Datensendungen also etwa Datenpakete, Telegramme, Nachrichten etc., empfangen und diese an andere Geräte weiterleiten können. Eine Weiterleitung ist etwa erforderlich, wenn ein Paket für einen Empfänger bestimmt ist, der möglicherweise außerhalb der Reichweite der Datensendung liegt; durch die erneute Versendung (Weiterleitung) des Pakets wird sichergestellt, dass der Empfänger die Datensendung erhält. Eine Weiterleitung hängt somit von Eigenschaften der Datensendung ab, insbesondere von der Übertragungsqualität der Datensendung.

Bei vielen Netzwerken ist die Übertragungsqualität für bestimmte Geräte - Absender und Empfänger - aus Sicht eines Retransmitters immer gleich. Dies gilt vor allem für Drahtlosnetzwerke in Gebäuden, da sich die Aufstellungsorte der Geräte nur gelegentlich ändern.

Die Menge der Empfänger, für die eine erneute Versendung durch den Retransmitter vorgenommen werden soll, kann anhand von Messungen von Signalstärken ermittelt werden, beispielsweise durch Messung der Signalstärken der Empfänger an dem Retransmitter. Empfänger, deren Signalstärken unterhalb eines Schwellenwerts liegen, können in eine Liste aufgenommen werden. In der Folge kann der Retransmitter konfiguriert werden, um Pakete, die an einen Empfänger in der Liste adressiert sind, weiterzuleiten, und andere Pakete zu ignorieren.

Neben den Empfängern können auch die Absender in derartige Konfigurationen einbezogen werden, denn deren Signalstärken variieren typischerweise ebenfalls von Gerät zu Gerät und beeinflussen somit die Entscheidung, ob Pakete weitergeleitet werden sollten oder nicht. Es können daher an dem Retransmitter auch die Signalstärken der Absender gemessen werden und eine Liste von Versendern angelegt werden, deren Pakete durch den Retransmitter weitergeleitet / erneut versendet werden. Da die meisten Geräte in einem Netzwerk sowohl als Versender als auch als Empfänger in Erscheinung treten, können die Messungen einmalig gemacht werden. In der Folge werden sämtliche Kombinationen von Adressen aller Geräte betrachtet. Anhand der Messwerte der Geräte beider Adressen einer solchen Kombination kann entschieden werden, ob die Messwerte unterhalb eines Schwellenwerts liegen. Die Kombinationen, die diese Bedingung erfüllen, werden in eine Liste aufgenommen. Empfängt der Retransmitter ein Paket, prüft er, ob die Absenderadresse und die Zieladresse des Pakets als Kombination in der Liste vorliegt. In diesem Fall leitet der Retransmitter das Paket weiter, andernfalls nicht.

Anstelle der Verwendung von Listen ist die Verwendung von "Regeln" des Retransmitters bekannt. Eine Regel ist eine Definition, die angibt, dass Pakete, die eine Kombination von zwei bestimmten Adressen verwenden, weitergeleitet werden sollen.

Retransmitter verfügen üblicherweise über beschränkte Ressourcen. Insbesondere ist die Anzahl der Regeln, die auf einem Retransmitter gespeichert werden oder mit denen ein Retransmitter programmiert werden kann, begrenzt. Werden mehr Adresspaare verwendet, als der Retransmitter anwenden kann, kann Abhilfe geschaffen werden, indem pauschal alle am Retransmitter eintreffenden Pakete weitergeleitet werden. Alternativ können Regeln verwendet werden, die nicht etwa weiterzuleitende Pakete angeben, sondern umgekehrt diejenigen Pakete, die nicht weitergeleitet werden. Derartige Maßnahmen funktionieren jedoch nur bedingt oder bedürfen einer Verbesserung hinsichtlich ihrer Effizienz.

WO 2023/104350 A1 offenbart ein programmierbares Paket-verarbeitendes Netzwerk, in dem Regeln ermittelt werden für ein Paketanalyse-Hardware-Subsystem.

### ZUSAMMENFASSUNG

Ausführungsformen der Erfindung betreffen computer-implementierte Verfahren zum Konfigurieren eines Retransmitters anhand einer zweidimensionalen Datenstruktur, wobei eine erste Dimension der Datenstruktur Absenderadressen und eine zweite Dimension Zieladressen umfasst und wenigstens einige Felder der Datenstruktur Angaben darüber enthalten, ob eine Datensendung, die von einer der mit dem betreffenden Feld assoziierten Adressen an die andere der beiden Adressen gerichtet ist, weitergeleitet werden soll oder nicht, wobei derartige Verfahren umfassen: Auswählen einer Anzahl der Felder, für deren Adressen Datensendungen weitergeleitet werden sollen; Ausdehnen eines jeweiligen rechteckigen Bereichs um jedes der ausgewählten Felder in der ersten und der zweiten Dimension und jeweils in beide Richtungen, ohne dass der jeweilige rechteckige Bereich ein Feld umfasst, für dessen Adressen Datensendungen nicht weitergeleitet werden sollen; Erzeugen einer jeweiligen Regel aus den rechteckigen Bereichen, wobei jede der Regeln einen Bereich von Absenderadressen und einen Bereich von Zieladressen definiert, wobei der Bereich der Absenderadressen der Regel durch die Felder in der ersten Dimension und der Bereich der Zieladressen der Regel durch die Felder in der zweiten Dimension des rechteckigen Bereichs bestimmt wird; und Konfigurieren des Retransmitters mit den erzeugten Regeln.

Die zweidimensionale Datenstruktur definiert vorzugsweise einen Adressraum, wobei sich die erste Dimension der Datenstruktur über sämtliche Adressen von einer kleinsten bis zu einer größten möglichen oder erwarteten Adresse erstreckt. Die zweite Dimension kann den gleichen oder einen anderen Adressraum definieren. Der Adressraum der einen Dimension stellt Absenderadressen und der andere Adressraum Zieladressen dar. In beiden Dimensionen sind die Adressen in aufsteigender oder absteigender Reihenfolge angegeben, wobei die Datenstruktur für jede Adresse ein Feld enthält. Die Adressräume können sämtliche aufeinanderfolgenden Adressen enthalten oder auch Lücken aufweisen. In jedem Feld kann eine Angabe darüber enthalten sein, ob Datensendungen, die von einer Adresse der einen Dimension dieses Feldes stammen und an die Adresse der anderen Dimension dieses Feldes gerichtet sind, weitergeleitet werden sollen. Die Angabe kann in einer Ausführungsform einfach eine binäre Angabe (Eins oder Null) oder auch einen anderen computerlesbaren Begriff umfassen. Die Angabe muss nicht notwendigerweise in jedem Feld enthalten sein, sondern kann auch fehlen. Fehlt die Angabe für ein Feld, so wird in einer Ausführungsform ein Standardwert angenommen, beispielsweise eine Angabe, dass Datensendungen nicht weitergeleitet werden sollen.

Die Datenstruktur kann als zweidimensionaler Array implementiert sein, alternativ als verkettete Liste oder auch in Form einer relationalen Datenstruktur, etwa einer Datenbank.

Das Auswählen der Felder kann in einer Ausführungsform höchstens so viele Felder umfassen wie eine Anzahl von Regeln, mit denen der Retransmitter eingestellt werden kann. Vorzugsweise werden genauso viele Felder ausgewählt, wie die Anzahl der möglichen Regeln für den Retransmitter, falls die Datenstruktur so viele Felder, deren Datensendungen weitergeleitet werden sollen, enthält; andernfalls werden einfach sämtliche derart markierten Felder ausgewählt. Die Auswahl kann zufallsbasiert oder von einem Anwender vorgegeben sein. Alternativ können bei der Auswahl diejenigen Felder bevorzugt werden, deren Adressen in der Vergangenheit am häufigsten in Datensendungen vorgefunden wurden. Als weitere Alternative oder als zusätzliche Einschränkung können vorzugsweise solche Felder ausgewählt werden, die nicht in unmittelbarer Nachbarschaft zueinander liegen. Als weitere Alternative können solche Felder ausgewählt werden, die möglichst weit auseinander liegen. Eine weitere Alternative besteht darin, die Felder zunächst in Clustern zusammenzufassen und je Cluster ein zentral gelegenes Feld auszuwählen.

Die ausgewählten Felder werden als Bereiche betrachtet, die durch Ausdehnen erweitert werden. Die Bereiche werden um Zeilen und Spalten der Datenstruktur erweitert und behalten somit eine rechteckige Gestalt. Dies ermöglicht die spätere Erzeugung besonders prägnanter Regeln, die statt einzelner Adresspaare Adressbereiche definieren sollen. Stoßen zwei Bereiche aneinander und ergeben gemeinsam wiederum ein Rechteck, so können die Bereiche zu einem Bereich vereinigt werden, so dass die Anzahl der ausgewählten Bereiche um einen Bereich sinkt. In diesem Fall kann nach Beendigung der Ausdehnungen ein weiteres bislang nicht ausgewähltes Feld ausgewählt und auch ausgedehnt werden, falls noch nicht alle markierten Felder ausgewählt wurden.

Verbleiben selbst nach dem Ausdehnen der Felder/Bereiche noch markierte Felder, die nicht ausgewählt wurden, so wird eine weitere Ausdehnung vorgenommen mit dem Ziel, bei gleichbleibender Anzahl der Bereiche sämtlich markierten Felder auszuwählen.

Hierbei wird nunmehr auch das Auswählen nichtmarkierter Felder akzeptiert, um die verbleibenden markierten Felder in bestehende Bereiche aufzunehmen. In einer Ausführungsform wird für jedes der verbleibenden markierten Felder derjenige Bereich ermittelt, der bei Ausdehnung auf das jeweilige markierte Feld die kleinste Menge an nichtmarkierten Feldern aufnimmt. Die Bereiche werden anschließend entsprechend ausgedehnt, so dass sämtliche markierten Felder ausgewählt sind und die Anzahl der Bereiche weiterhin der Anzahl der zulässigen Regeln entspricht.

Als Alternative zum Auswählen ebenso vieler Felder, wie der Retransmitter Regeln zulässt, kann das Auswählen der Felder in einer Ausführungsform stattdessen sämtliche markierte Felder umfassen. Somit können nach dem Ausdehnen der Felder zu rechteckigen Bereichen mehr Bereiche vorliegen, als Regeln zulässig sind. Ist dies der Fall, wird die Differenz zwischen der Anzahl ausgewählter Felder und der Anzahl der Regeln ermittelt mit dem Ziel, die Anzahl der ausgewählten Felder in Form von Bereichen auf die Anzahl der Regeln zu reduzieren, mit der der Retransmitter konfiguriert werden kann. Analog zu dem obigen Vorgehen werden zunächst die Felder zu Bereichen ausgedehnt, wobei die Bereiche eine rechteckige Form behalten und nur Spalten und/oder Zeilen aufnehmen, die ausschließlich aus markierten Feldern bestehen. Auch in dieser Ausführungsform können Bereiche, die aneinander angrenzen sich überlagern oder einen anderen Bereich vollständig enthalten, als ein einzelner Bereich betrachtet werden. Verbleiben nach diesem Vorgehen immer noch mehr Bereiche als zulässige Regeln, so wird eine weitere Ausdehnung vorgenommen, bei der Bereiche auf andere Bereiche ausgedehnt werden, wobei auch nichtmarkierte Felder in die Bereiche aufgenommen werden können. Analog zu der vorstehend beschriebenen Ausführungsform kann hierbei ermittelt werden, welche Kombination von zwei Bereichen die kleinste Menge an nichtmarkierten Feldern erfordert. Dies kann iterativ wiederholt werden, bis die Anzahl der Bereiche der Anzahl der angestrebten Regelzahl entspricht. Felder, die weder markiert noch unmarkiert sind, werden in einer Ausführungsform als unmarkierte Bereiche betrachtet.

In den hier beschriebenen Ausführungsformen kann das Ausdehnen eines jeweiligen rechteckigen Bereichs ferner umfassen: Erzeugen eines ersten Bereichs durch Ausdehnen des rechteckigen Bereichs in beide Richtungen der ersten Dimension und Ausdehnen des rechteckigen Bereichs in beide Richtungen der zweiten Dimension; Erzeugen eines zweiten Bereichs durch Ausdehnen des rechteckigen Bereichs in beide Richtungen der zweiten Dimension und Ausdehnen des rechteckigen Bereichs in beide Richtungen der ersten Dimension; und Übernehmen desjenigen ersten oder zweiten Bereichs, der eine größere Anzahl an Feldern enthält, für deren Adressen Pakete weitergeleitet werden sollen, für das Erzeugen einer jeweiligen Regel. Auf diese Weise optimiert die Erfindung für jedes Feld beziehungsweise den daraus entstehenden Bereich die Anzahl der markierten Felder. Abhängig von der Reihenfolge, in der ein Bereich in eine der beiden Dimensionen ausgedehnt wird, können unterschiedliche Anzahlen markierter Felder aufgenommen werden. Durch Vergleichen der beiden Möglichkeiten und der Entscheidung für den Bereich mit der größeren Anzahl markierter Felder können nachfolgende weitere Ausdehnungen oder Kombinationen von Bereichen reduziert oder vermieden werden.

Das Erzeugen einer Regel wird anhand der rechteckigen Bereiche vorgenommen. Für jeden Bereich wird die kleinste und die größte Adresse der ersten Dimension und die kleinste und die größte Adresse der zweiten Dimension bestimmt. Diese beiden Adressbereiche geben den Absender- und den Zieladressbereich für weiterzuleitende Dateneinheiten an und bilden die Parameter für die zu erstellende Regel. Die konkrete Syntax der Regel ergibt sich aus der API oder der konkreten Konfigurationssituation des Retransmitters.

Das Verfahren kann ferner umfassen: Empfangen einer Datensendung an dem Retransmitter; Prüfen, ob die Absender- und die Zieladresse der Datensendung in einen der Absender- und Zieladressbereiche einer der Regeln des Retransmitters fällt; und Weiterleiten der Dateneinheit an deren Zieladresse, wenn die Prüfung positiv ist.

Ausführungsformen der Erfindung umfassen auch einen Retransmitter, umfassend einen Prozessor zum Ausführen von Befehlen, die eines der hier offenbarten Verfahren ausführen.

Ausführungsformen umfassen außerdem ein computerlesbares Medium mit darauf gespeicherten Befehlen, die, wenn sie durch einen Prozessor ausgeführt werden, eines der hier offenbarten Verfahren durchführen.

### KURZE BESCHREIBUNG DER FIGUREN

Figuren 1 bis 7 zeigen eine beispielhafte zweidimensionale Datenstruktur während der Ausführung eines erfindungsgemäßen Verfahrens.
Figuren 8 und 9 zeigen eine beispielhafte zweidimensionale Datenstruktur bei der Ausführung einer weiteren Ausführungsform des Verfahrens.
Figuren 10 bis 13 zeigen Ablaufdiagramme für ein unterschiedliche erfindungsgemäße Verfahren.

### AUSFÜHRLICHE BESCHREIBUNG

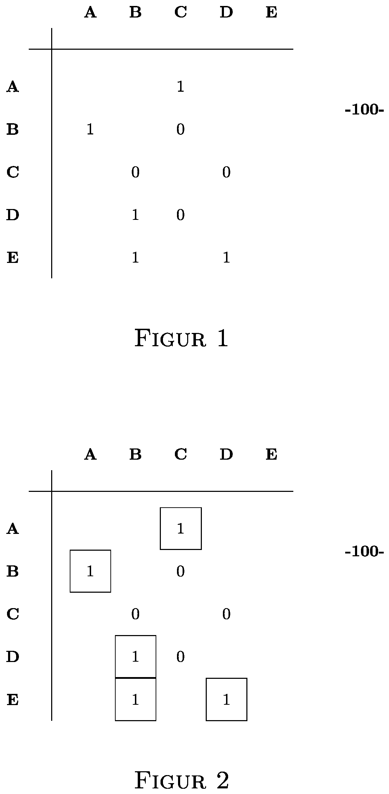

Figur 1 zeigt eine beispielhafte Datenstruktur 100 zu Beginn eines der hier offenbarten Verfahren. Die Datenstruktur ist als Tabelle angelegt, deren Spalten und Zeilen einzelnen Adressen zugeordnet sind. Beispielhaft sind die Adressen A, B, C, D, E gezeigt. In dem gezeigten Beispiel zeigen die Spalten die Absenderadressen (Herkunftsadressen, Quelladressen) eintreffender Datensendungen (Datenpakete) und die Zeilen deren Zieladressen. In dem gezeigten Beispiel ist die Menge der Absenderadressen mit der Menge der Zieladressen identisch, die Mengen können sich aber in anderen Ausführungsformen unterscheiden. Die Adressen einer Dimension, also entweder die Absenderadressen oder die Zieladressen, können unmittelbar aufeinanderfolgen oder auch Lücken aufweisen; jedoch sind sie vorzugsweise aufsteigend oder absteigend geordnet.

Die Felder der Datenstruktur sind entweder mit Null (o) oder Eins (1) besetzt oder bleiben leer. Null und Eins stehen in diesem Beispiel für die Angabe, dass eine Datensendung, die von der betreffenden Absenderadresse stammt und an die betreffende Zieladresse adressiert ist, von einem Retransmitter nicht weitergeleitet beziehungsweise weitergeleitet werden soll. Felder mit einer solchen Angabe zur Weiterleitung werden als markierte beziehungsweise unmarkierte Felder bezeichnet. Die Werte Null und Eins sind beispielhaft und können vertauscht oder durch andere Werte ersetzt werden. Leere Felder werden als nicht definierte Felder betrachtet, die in einer Ausführungsform wie unmarkierte Felder behandelt werden; Datensendungen mit den entsprechenden Adresskombinationen werden nicht weitergeleitet. Die Felder der Diagonale entsprechen in dem gezeigten Beispiel Kombinationen aus identischen Adressen, also (A, A), (B, B), etc., und werden nicht gesetzt.

Die gezeigten Werte können in einer Ausführungsform durch Messungen an dem Retransmitter ermittelt werden. Zu diesem Zweck können an dem Retransmitter die Signalstärken der Geräte, die den Adressen A bis E entsprechen, vorgenommen werden. Jede Signalstärke wird mit einem Schwellwert verglichen. Liegt eine Signalstärke unterhalb des Schwellwerts, werden alle Felder, die die Adresse des entsprechenden Geräts als Absenderadresse enthalten, auf Eins oder einen anderen Wert gesetzt, der die Weiterleitung von Datensendungen angibt. Dieses Vorgehen beruht auf der Überlegung, dass ein Paket, das am Retransmitter bereits mit schwacher Signalstärke eingeht, durch den Retransmitter erneut versendet werden sollte, um dessen Zustellung beim Empfänger zu gewährleisten. Die Anfertigung der Datenstruktur kann jedoch auch andere oder weitere Parameter berücksichtigen, etwa paarweise betrachtete Signalstärken für Sender und Empfänger. Alternativ oder zusätzlich zu einer Messung können die Markierungen in der Datenstruktur manuell durch Anwender gesetzt werden.

Dem gezeigten Beispiel zufolge sollen Datensendungen, die von Adresse A nach C, B nach A, D nach B und E nach B oder D versendet werden, durch den Retransmitter erneut versendet werden, während Datensendungen von B nach C, C nach B oder D sowie D nach C ausdrücklich nicht weitergesendet werden sollen.

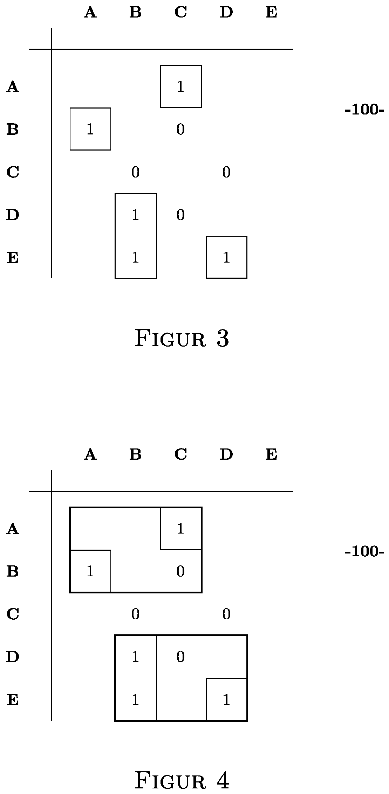

Figur 2 zeigt die Datenstruktur 100 nach Auswählen derjenigen Felder, für deren Adressen Pakete weitergeleitet werden sollen. In dem gezeigten Beispiel werden sämtliche markierten Felder ausgewählt, ohne die Anzahl zulässiger Regeln zu berücksichtigen. Alternativ werden lediglich ebenso viele Felder ausgewählt, wie der zu konfigurierende Retransmitter an Regeln zulässt. Im ersten Fall (alle markierten Felder ausgewählt) dürfte die Anzahl der ausgewählten Felder größer als die zulässige Anzahl N der Regeln sein: die Anzahl der Felder beziehungsweise Bereiche aus Feldern muss reduziert werden. Im zweiten Fall (nur N Felder ausgewählt) dürften markierte Felder übrigbleiben, die nicht ausgewählt wurden: Diese ausgewählten Felder beziehungsweise Bereiche sollen ausgedehnt werden, um die nicht ausgewählten markierten Felder abzudecken. Im Folgenden wird zunächst der erste Fall dargestellt; der zweite Fall wird unter Bezugnahme auf Figuren 4 bis 6 erläutert.

Im gezeigten Fall wurden alle fünf Felder ausgewählt. Beträgt die Anzahl der im Retransmitter zulässigen Regeln etwa Drei, dann ist die Anzahl der Felder zu hoch. Ausgehend von jedem der ausgewählten Felder wird nun ein rechteckiger Bereich erstellt, indem das betreffende Feld in jeder der beiden Dimensionen (X-Achse und Y-Achse) in jeder der beiden Richtungen (links und rechts beziehungsweise oben und unten) um Nachbarfelder ergänzt wird, solange diese Nachbarfelder keine unmarkierten Felder enthalten. Der Bereich wird jeweils um eine ganze Zeile beziehungsweise Spalte ergänzt, so dass die derart erweiterten Bereiche eine rechteckige Form behalten. Aufgrund der rechteckigen Form können später Adressbereiche definiert werden, die als Parameter für die zu erzeugenden Regeln des Retransmitters dienen.

Die Felder für die Adresskombinationen (B, A) und (A, C) sowie (E, D) werden demnach nicht erweitert, da sie nach allen Seiten lediglich von unmarkierten Feldern umgebend sind. Hingegen kann das Feld mit der Adresskombination (D, B) auf das Feld (E, B) erweitert werden, das ebenfalls markiert ist. Jedoch sind für (D, B) keine weiteren Erweiterungen möglich, da die übrigen benachbarten Felder sämtlich nicht markiert sind. Analog wird auch das Feld (E, B) erweitert, nämlich auf das Feld (D, E).

Figur 3 zeigt das Ergebnis des Ausdehnungsvorgangs. Die Anzahl der Bereiche kann wird reduziert, um die zugelassene Anzahl der Regeln zu erreichen. Grundsätzlich wird die Anzahl der Bereiche reduziert, wenn ein Bereich vollständig in einem anderen enthalten ist oder an diesen bei gleicher Seitenlänge angrenzt und kombiniert werden kann. Vorliegend kann einer der Bereiche, der die Felder (D, B) und (E, B) umfasst, entfernt werden.

Entspricht nach diesem Vorgehen die Anzahl der Bereiche der Anzahl der zulässigen Regeln, wird aus jedem der Bereiche eine Regel erzeugt, die anschließend auf den Retransmitter angewendet werden kann. In dem gezeigten Beispiel übersteigt die Anzahl der Bereiche jedoch weiterhin die Anzahl der zulässigen Regeln. Daher erfolgt in einem weiteren Schritt eine weitere Ausdehnung der Bereiche, wobei diesmal unter bestimmten Bedingungen auch unmarkierte Felder in die Bereiche aufgenommen werden können. In einem Beispiel kann zu diesem Zweck für alle Paare von Bereichen die Anzahl der unmarkierten Felder ermittelt werden, die ausgewählt werden würde, wenn die beiden Bereiche zu einem neuen rechteckigen Bereich vereinigt werden würden.

Für das gezeigte Beispiel wäre jeweils die Anzahl der ausgewählten unmarkierten Felder für die Bereichskombinationen {(A, C), (B, A)}, {(A, C), (D-E, B)}, {(A, C), (E, D)}, {(B, A), (D-E, B)}, {(B, A), (E, D)} und {(D-E, B), (E, D)} zu ermitteln. Die Anzahl beträgt jeweils 4, 7, 8, 5, 12 und 3. Figur 4 zeigt beispielhaft die Bereichskombinationen {(A, C), (B, A)} und {(D-E, B), (E, D)}. Die Bereichskombination {(D-E), (E, D)} enthält mit 3 zusätzlich ausgewählten unmarkierten Feldern die geringste Anzahl und wird somit ausgewählt, die übrigen verworfen. Im Ergebnis liegen nun drei Bereiche vor; dies entspricht der Anzahl der zulässigen Regeln und wird als Grundlage für die Erstellung und Anwendung der Regeln verwendet. Wäre die Anzahl der Bereiche weiterhin höher als die Anzahl der Regeln, würde der Schritt, Bereiche zu kombinieren und die Bereichskombination mit geringster Auswahl unmarkierter Felder auszuwählen, wiederholt werden, bis die Anzahl der Bereiche mit der Anzahl der Regeln übereinstimmt.

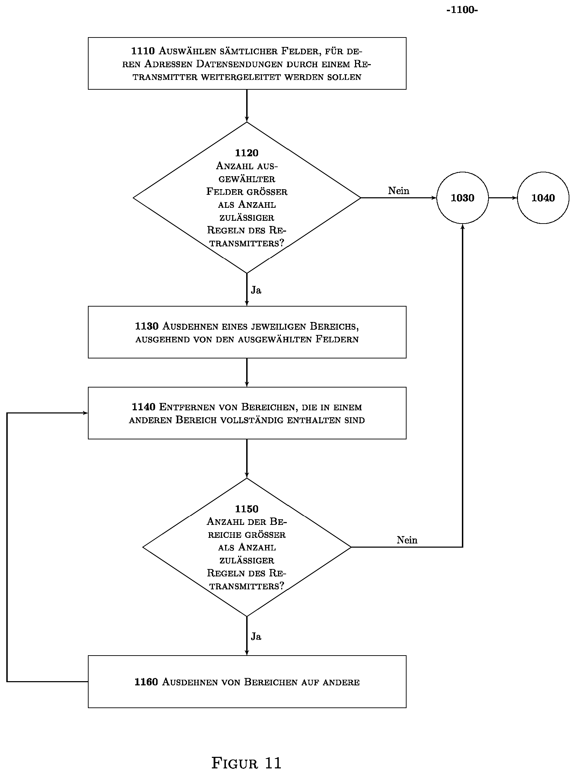

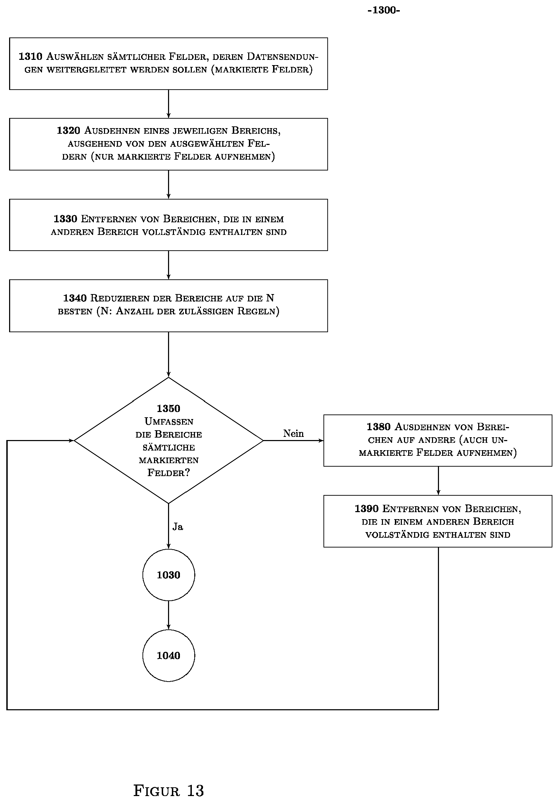

Alternativ zu der Betrachtung der kleinsten Anzahl unmarkierter Felder als Bedingung für eine Ausdehnung und Vereinigung von Bereichen kann auf die Häufigkeit von Datensendungen abgestellt werden. In einer solchen Ausführungsform kann die Datenstruktur eine dritte Dimension oder ein Attribut je Feld aufweisen, in der oder in dem fortlaufend oder in einem Probezeitraum für jedes Feld die Anzahl eingehender Datensendungen gespeichert wird. Bei der Ausdehnung von Bereichen auf andere können diejenigen Bereiche bevorzugt werden, die gemeinsam die größte Summe derartiger Zähler enthalten. Dieser Ausführungsform liegt die Überlegung zugrunde, Dass eine gemeinsame Regel für mehrere Felder von Vorteil ist, wenn diese Regel häufig genutzt wird. Unter Bezugnahme auf Figur 11, Schritt 1160, und Figur 13, Schritt 1380, werden weiter unten Alternativen für die Ermittlung von Bereichskombinationen erläutert.

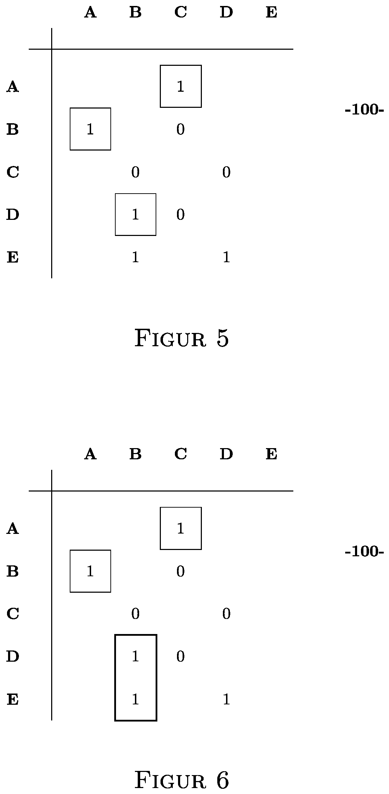

Unter Bezugnahme auf die Figuren 2 bis 4 wurde eine Ausführungsform erläutert, die sämtliche markierten Felder auswählt und diese in der Folge reduziert, bis die zulässige Anzahl der Regeln erreicht wurde. Figur 5 zeigt eine Ausführungsform, die stattdessen nur ebenso viele Felder auswählt, wie Regeln zugelassen sind.

Figur 5 zeigt die Datenstruktur 100 aus Figur 1, wobei die Felder (A, C), (B, A) und (D, B) ausgewählt wurden; somit entspricht die Anzahl ausgewählter Felder der Anzahl der zulässigen Regeln. Zu der konkreten Auswahl der Felder kommen unterschiedliche Ausführungsformen in Betracht. In der gezeigten Ausführungsform wurde für jede Zeile der Datenstruktur 100 das erste markierte Feld ausgewählt. Alternative Ausführungsformen umfassen Auswählen des jeweils ersten Feldes einer Spalte, des ersten und letzten Feldes jeder Zeile oder Spalte, möglichst weit voneinander entfernte markierter Felder, eine zufälligen Teilmenge der markierten Felder, Bilden von Clustern markierter Felder (Connected-Components-Algorithmus) und Auswählen derjenigen markierten Felder, in den Clustern jeweils mittig liegen.

Figur 6 zeigt die Datenstruktur 100 nach Ausdehnen/Erweitern der ausgewählten markierten Felder zu Bereichen. Wie bereits unter Bezugnahme auf Figur 3 beschrieben, umfasst das Erweitern der ausgewählten markierten Felder die Bildung rechteckiger Bereiche für jedes dieser Felder, wobei jeder Bereich, ausgehend von dem betreffenden Feld, um Nachbarspalten/-zeilen ergänzt wird, solange diese lediglich markierte Felder enthalten. Die resultierenden Bereiche enthalten somit ebenfalls ausschließlich markierte Felder. Figur 6 zeigt in dem konkreten Fall, dass eine Erweiterung lediglich für das Feld (D, B) möglich war; dieses wurde um das Feld (E, B) ergänzt. Die Felder (B, A) und (A, C) konnten nicht erweitert werden, da an diese Felder keine markierten Felder grenzen. Eine Vereinigung von Bereichen findet nicht statt, da auch nach Erweiterung keiner der gezeigten Bereiche aneinandergrenzen oder sich vollständig überdecken. Werden allerdings vollständig überlappende Bereiche oder Bereiche, die vollständig in anderen Bereichen enthalten sind, angetroffen, so werden die redundanten Bereiche entfernt und für jeden entfernten Bereich ein weiteres nicht ausgewähltes markiertes Feld ausgewählt und für diese Felder das Ausdehnen/Erweitern wiederholt. Im gezeigten Beispiel bleibt das Feld (E, D) als einziges markiertes Feld weiterhin nicht ausgewählt.

Da noch nicht alle markierten Felder ausgewählt werden konnten, werden in einem nächsten Schritt die bereits ermittelten Bereiche weiter ausgedehnt, bis alle verbleibenden markierten Felder von diesen Bereichen abgedeckt sind. Bei diesem Schritt werden auch unmarkierte Felder in die Bereiche aufgenommen. Allerdings werden lediglich diejenigen Bereiche ausgedehnt, die den nicht ausgewählten markierten Feldern am nächsten liegen und/oder bei deren Ausdehnen am die kleinste Anzahl unmarkierter Felder ausgewählt werden. Alternativ wird, analog zu der in Figur 4 veranschaulichten Maßnahme, zunächst ermittelt, welcher der existierenden Bereiche die kleinste Anzahl an nichtmarkierten Feldern enthält, wenn er auf eines oder mehrere der nicht ausgewählten markierten Felder erweitert wird. Dies kann für jedes nicht ausgewählte markierte Feld separat ermittelt werden.

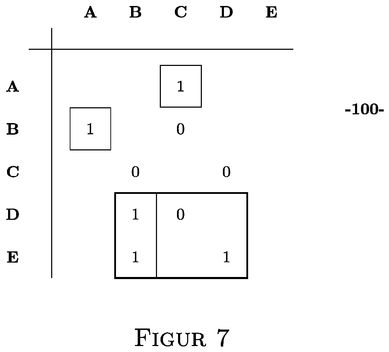

Figur 7 zeigt das Ergebnis dieser Maßnahme. Der Bereich, der die Felder (D, B) und (E, B) umfasst, liegt dem nicht ausgewählten markierten Feld (E, D) am nächsten und wird ausgedehnt, bis dieses Feld in dem Bereich liegt. Der resultierende Bereich umfasst somit zusätzlich die nicht markierten Felder (D, C), (D, D) und (E, C). Somit sind sämtliche markierten Felder in drei Bereichen umfasst. Die ermittelten Parameter zur Definition von Adressbereichen für die drei Retransmitterregeln lauten (A, C), (B, A) und (D-E, B-D).

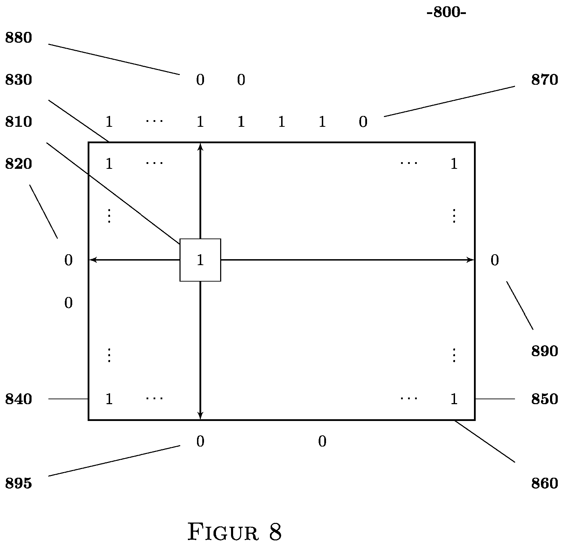

Die hinsichtlich Figur 3 und Figur 7 erläuterten Schritte zum Ausdehnen können in einer Ausführungsform weiter variiert werden. Figur 8 zeigt einen Ausschnitt aus einer Datenstruktur 800 mit einem einzelnen ausgewählten markierten Feld 810. Das ausgewählte Feld 810 ist von weiteren markierten Feldern umgeben, wie durch Punkte ("...") angedeutet ist. Ferner sind nichtmarkierte Felder ("0") gezeigt, beispielsweise die Felder 820 und 870.

Das ausgewählte Feld 810 wird zu einem Bereich ausgedehnt. Die Ausdehnung erfolgt zunächst in die erste Dimension, hier nach links und rechts. Wie bereits erläutert wurde, wird das Feld 810 beziehungsweise der entstehende Bereich dabei in beide Richtungen um Spalten der Datenstruktur 800 erweitert, solange diese Spalten ausschließlich markierte Felder enthalten. Die Ausdehnung wird in dem gezeigten Beispiel links und rechts jeweils durch ein unmarkiertes Feld, beispielsweise Feld 820 und Feld 890, aufgehalten und endet dort.

Anschließend wird der in die Breite ausgedehnte Bereich in die zweite Dimension ausgedehnt, hier nach oben und unten. Die Ausdehnung wird wiederum oben und unten durch unmarkierte Felder begrenzt, hier unter anderem durch die Felder 870 und 895. Der Bereich wird nach beiden Ausdehnungen somit durch die Seitenlinien 840 und 850 sowie 830 und 860 begrenzt.

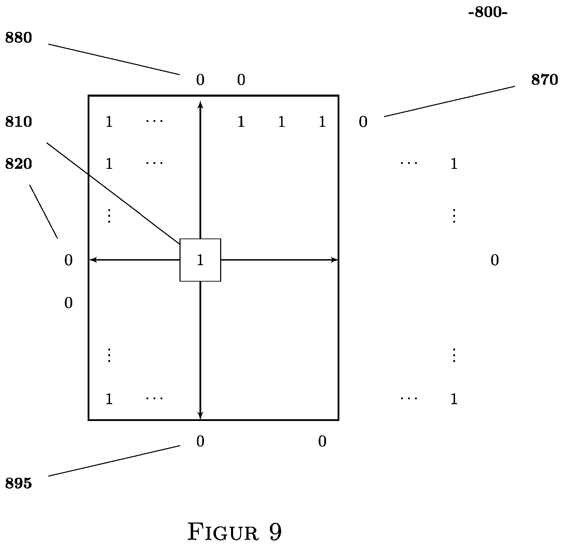

Figur 9 zeigt das umgekehrte Vorgehen: Der Bereich 810 wird zunächst in der zweiten Dimension und erst danach in der ersten Dimension ausgedehnt. Hierbei wird die Ausdehnung in der zweiten Dimension oben durch das unmarkierte Feld 880 und unten durch Feld 895 begrenzt. In der zweiten Dimension erstreckt sich der Bereich nach der Ausdehnung links wiederum bis zu Feld 820. Rechts wird der Bereich nunmehr durch das Feld 870 begrenzt.

Wie aus den Figuren 8 und 9 deutlich wird, können bei der Ausdehnung unterschiedliche Ergebnisse für Bereichsausdehnungen erzielt werden, wenn die Reihenfolge der betrachteten Dimensionen vertauscht wird. In einer Ausführungsform werden bei der Ausdehnung beide Möglichkeiten durchgeführt und diejenige als Ergebnis akzeptiert, die die größere Anzahl an markierten Feldern enthält. Dies kann nacheinander für jedes ursprünglich ausgewählte Feld ausgeführt werden. Alternativ können zunächst für sämtliche ausgewählten Felder/Bereiche beide Ausdehnungen durchgeführt werden und danach diejenigen ausgedehnten Bereiche ausgewählt werden, die insgesamt die größte Anzahl an markierten Feldern abdecken.

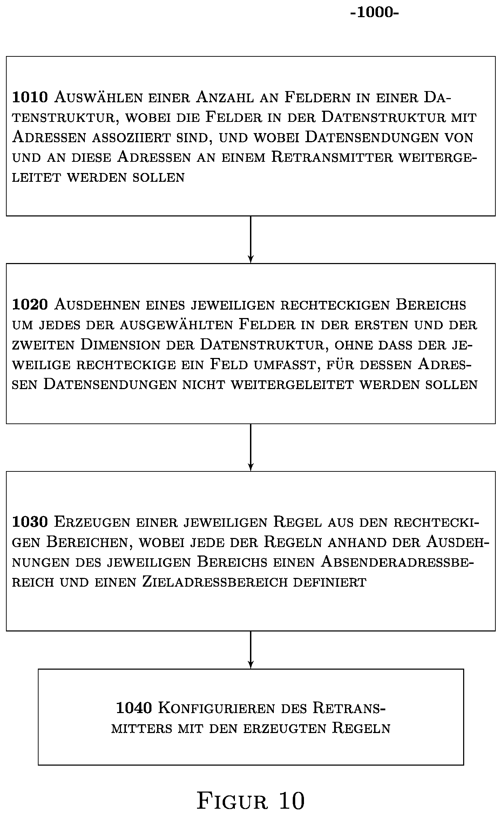

Figur 10 zeigt ein erfindungsgemäßes Verfahren 1000 zum Erzeugen und Anwenden von Regeln für einen Retransmitter. Das Verfahren 1000 ist auf einem Computer implementiert und beginnt mit Schritt 1010 anhand einer zweidimensionalen Datenstruktur, deren erste Dimension Absenderadressen und deren zweite Dimension Zieladressen enthält. Die Adressen in beiden Dimensionen sind vorzugsweise aufsteigend oder absteigend geordnet. Zumindest einige der Felder der Datenstruktur sind markiert, um anzuzeigen, dass Pakete, die von der entsprechenden Absenderadresse stammen und an die entsprechende Zieladresse adressiert sind, durch einen Retransmitter weitergeleitet werden sollen. Diese Angaben können etwa aufgrund von zuvor durchgeführten Messungen von Signalstärken der hinter den Adressen stehenden Geräten ermittelt werden. Schritt 1010 umfasst Auswählen einer Anzahl der markierten Felder. Beispielsweise können sämtliche markierten Felder ausgewählt werden oder aber genauso viele Felder, wie der Retransmitter an Regeldefinitionen zulässt.

In Schritt 1020 wird jedes der ausgewählten Felder als ein Bereich betrachtet. Jeder der Bereiche wird in beiden Dimensionen und in jede der beiden Richtungen ausgedehnt, wobei jeder Bereich eine rechteckige Form behält und auch bei der Erweiterung um weitere Felder keine unmarkierten Felder aufnimmt. Ein rechteckiger Bereich umfasst ein oder mehrere Zeilen und Spalten in der Datenstruktur. Das Ausdehnen kann in unterschiedlicher Reihenfolge der Dimensionen durchgeführt werden. Beim Ausdehnen können ein oder mehrere Bereiche in einem anderen Bereich vollständig enthalten sein und werden in diesem Falle auf einen Bereich reduziert. Liegt die Anzahl der Bereiche unterhalb der Anzahl der zulässigen Regeln, können weitere Felder als weitere Bereiche ausgewählt werden, soweit solche Felder existieren. Liegen weitere Felder vor, obwohl die Anzahl der Bereiche bereits der Anzahl der Regeln entspricht, können bestimmte Bereiche so erweitert (ausgedehnt) werden, bis die betreffenden Felder in diesen Bereichen liegen.

In Schritt 1030 werden aus den Bereichen Regeln für den Retransmitter erzeugt. Jede Regel definiert Absender- und Zieladressen, deren Datensendungen durch den Retransmitter weitergeleitet werden sollen. Die ermittelten Bereiche definieren durch ihre senkrechte und waagerechte Ausdehnung Absender- und Zieladressräume, die aus der Datenstruktur direkt abgelesen werden können. Für jeden Bereich wird somit eine Regel erzeugt, die den Absenderadressraum und den Zieladressraum dieses Bereichs als Parameter verwendet.

Zuletzt wird der Retransmitter in Schritt 1040 mit diesen Regeln konfiguriert, indem die ermittelten Parameter in geeigneter Weise gespeichert werden. In der Folge prüft der Retransmitter bei Erhalt einer Datensendung, ob deren Absenderadresse und Zieladresse - auch hier kann ein Adressraum gegeben sein - unter eine der angewendeten Regeln fällt.

Figur 11 zeigt ein weiteres computer-implementiertes Verfahren 1100 zum Erzeugen und Anwenden von Regeln für einen Retransmitter. Das Verfahren 1100 betrifft eine Ausführungsform der Erfindung, in der sämtliche markierten Felder in einer Datenstruktur ausgewählt werden, ohne zunächst die Anzahl zulässiger Regeln zu berücksichtigen.

In Schritt 1110 werden sämtliche markierten Felder in einer Datenstruktur ausgewählt. Die Datenstruktur und die markierten Felder weisen die gleichen Eigenschaften auf wie in den vorstehend beschriebenen Ausführungsformen.

In Schritt 1120 erfolgt eine Prüfung, ob die Anzahl der ausgewählten Felder diejenige der Regeln übersteigt, mit denen der Retransmitter konfiguriert werden kann. Ist dies nicht der Fall, fährt das Verfahren 110 bei Schritt 1030 und Schritt 1040 (Figur 10) mit dem Erzeugen und Anwenden der Regeln fort. Übersteigt die Anzahl der ausgewählten Felder hingegen diejenige der Regeln, fährt das Verfahren mit Schritt 1130 fort. Dieser Schritt betrifft das Ausdehnen der ausgewählten Felder in rechteckigen Bereichen und folgt analog zu dem oben beschriebenen Schritt 1020 des Verfahrens 1000.

Anschließend ermittelt das Verfahren 1100 in Schritt 1140 Bereiche, die von anderen Bereiche vollständig enthalten sind; solche Bereiche sind somit entweder eine Teilmenge andere Bereiche oder mit diesen sogar identisch. Bereiche, die vollständig in einem anderen enthalten sind, werden entfernt.

In Schritt 1150 wird die Prüfung aus Schritt 1120 wiederholt und somit erneut geprüft, ob die Anzahl der ausgewählten Felder beziehungsweise die Anzahl der Bereiche die Anzahl der zulässigen Regeln übersteigt. Wenn dies nicht länger der Fall ist, endet das Verfahren bei Schritt 1030 und Schritt 1040 mit dem Erzeugen und Anwenden der Regeln.

Verbleiben hingegen mehr Bereiche als zulässige Regeln, ist die Anzahl der Bereiche weiter zu reduzieren. In Schritt 1160 werden die Bereiche weiter ausgedehnt, um andere Bereiche zu überlagern; hierbei werden, anders als in Schritt 1130, auch nichtmarkierte Felder in die Bereiche aufgenommen. Die Entscheidung, welche Bereiche jeweils ausgedehnt werden, um bestimmte markierte Felder aufzunehmen, kann anhand unterschiedlicher Kriterien getroffen werden. Ein erstes Kriterium ist die Betrachtung aller möglichen Kombinationen aus zwei Bereichen, wobei jeweils die Anzahl der unmarkierten Felder ermittelt wird, die nötig wäre, um einen der beiden Bereiche auf den anderen auszudehnen; Die beiden Bereiche, die die kleinste Anzahl unmarkierter Felder aufnehmen müsste, wird der Ausdehnung unterzogen und einer der Bereiche entfernt. Ein zweites Kriterium besteht darin, eine erste Gruppe der N größten Bereiche zu bilden, wobei N die Anzahl der angestrebten Regeln umfasst. Eine zweite Gruppe umfasst die verbleibenden Bereiche. In der Folge werden, analog zum ersten Kriterium, alle Paare von Bereichen untersucht, wobei nunmehr jedes Paar einen Bereich aus der ersten Gruppe und einen Bereich aus der zweiten Gruppe umfasst. Wiederum wird dasjenige Paar gewählt, das die kleinste Anzahl unmarkierter Felder aufnimmt, um einen der beiden Bereiche auf den anderen auszudehnen. Ein drittes Kriterium umfasst Ermitteln der Entfernungen zwischen allen Paaren von Bereichen und anschließend Untersuchen des Bereichspaares mit der kleinsten Entfernung der beiden Bereiche zueinander. Der Vorgang wird wiederholt, bis die angestrebte Anzahl an Bereichen/Regeln erzielt wurde.

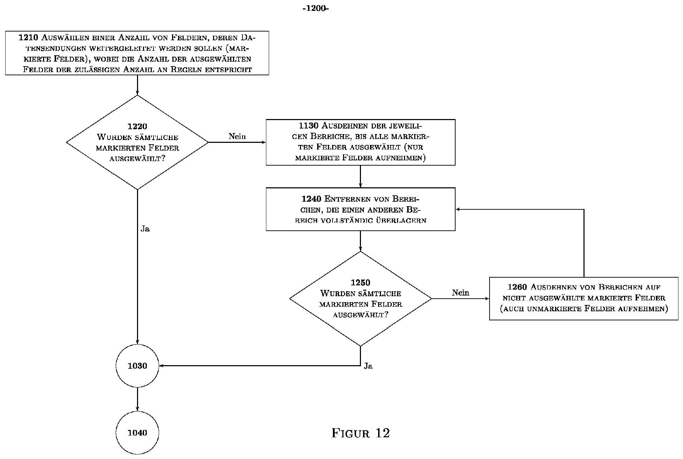

Figur 12 zeigt ein weiteres computer-implementiertes Verfahren 1200 zum Erzeugen und Anwenden von Regeln für einen Retransmitter. Das Verfahren 1200 betrifft eine Ausführungsform der Erfindung, in der in einer Datenstruktur eine Anzahl markierter Felder ausgewählt wird, die der Anzahl an Regeln entspricht, mit der ein Retransmitter konfiguriert werden kann.

In Schritt 1210 wird die genannte Anzahl an markierten Feldern ausgewählt. In Schritt 1220 folgt eine Prüfung, ob sämtliche markierten Felder ausgewählt sind oder noch markierte Felder verbleiben. Wenn keine markierten Felder verbleiben, endet das Verfahren 1200 mit Schritt 1030 und Schritt 1040; aus den ausgewählten Feldern werden Regeln für den Retransmitter erzeugt und auf diesen angewendet.

Verbleiben jedoch weitere markierte Felder, die nicht ausgewählt wurden, werden die bereits ausgewählten Felder in Schritt 1130 zu Bereichen ausgedehnt, bis alle markierten Felder von Bereichen abgedeckt und somit ausgewählt sind; wie bereits beschrieben, behalten die Bereiche der Ausdehnung ihre rechteckige Form und nehmen lediglich ganze Zeilen und/oder Spalten auf, die keine unmarkierten Felder enthalten. Die Ausdehnung erfolgt in alle vier Richtungen.

In Schritt 1240 können Bereiche, die in anderen Bereichen vollständig enthalten sind, entfernt werden. Hierbei wird die Anzahl der Bereiche weiter reduziert; für jeden Bereich, der entfernt wurde, kann ein weiteres markiertes Feld in die Auswahl der Bereich aufgenommen werden und ebenfalls Schritt 1130 unterzogen werden.

Anschließend wird bei Schritt 1250 geprüft, ob nunmehr sämtliche markierten Felder ausgewählt wurden. Ist dies der Fall, werden in Schritt 1030 und Schritt 1040 Regeln erzeugt und angewendet. Andernfalls werden in Schritt 1260 die bereits existierenden Bereiche auf die nicht ausgewählten markierten Felder ausgedehnt. Hierbei können die Bereiche auch unmarkierte Felder aufnehmen; jedoch erfolgt die Ausdehnung unter der Maßgabe, sowenig Felder wie möglich aufzunehmen. Entsprechende Ausführungsformen wurden oben unter Bezugnahme auf Figuren 1 bis 7 sowie Figur 11, Schritt 1160, erläutert.

Schritt 126o kann für jedes nicht ausgewählte markierte Feld ausgeführt werden und jedes Mal prüfen, ob alle markierten Felder ausgewählt sind (analog Schritt 1250), oder kann wie gezeigt in einer Schleife mit Schritt 1250 durchgeführt werden, bis dessen Bedingung erfüllt ist. In diesem Fall endet das Verfahren 1200 bei Schritt 1030 und 1040.

Figur 13 zeigt ein weiteres computer-implementiertes Verfahren 1300 zum Erzeugen und Anwenden von Regeln für einen Retransmitter. Das Verfahren 1300 betrifft eine Ausführungsform der Erfindung, in der in einer Datenstruktur zunächst sämtliche markierte Felder ausgewählt und diese zunächst in Bereichen zusammengefasst werden, die ausschließlich markierte Felder enthalten. Die Anzahl dieser Bereiche wird auf die Anzahl der Regeln reduziert, mit denen der Retransmitter konfiguriert werden kann, wobei ein Maß für die "besten" Regeln angewendet wird.

In Schritt 1310 werden, analog zu Schritt 1110, sämtliche markierten Felder ausgewählt. Diese Felder werden in Schritt 1320 anhand der bereits beschriebenen Ansätze, beispielsweise in Schritt 1130 des Verfahrens 1100, unter Berücksichtigung lediglich markierter Felder ausgedehnt, wobei die Bereiche immer eine rechteckige Form aufweisen. Ferner werden in Schritt 1330, analog zu dem bereits beschriebenen Schritt 1140 des Verfahrens 1140, diejenigen Bereiche entfernt, die vollständig in anderen Bereichen enthalten sind.

In Schritt 1340 werden die Bereiche, sofern ihre Anzahl größer ist als die Anzahl N der zulässigen Regeln, auf diese Anzahl reduziert. Das Reduzieren kann umfassen, die N Bereiche mit der größten Anzahl an Feldern zu behalten und die anderen zu entfernen. Alternativ können die Bereiche mit kleinstem Quotienten ihrer beiden Seitenlängen entfernt beziehungsweise beibehalten werden.

In Schritt 1350 wird geprüft, ob die Bereiche sämtliche markierten Felder abdecken; diese Prüfung ist gleichbedeutend mit der Prüfung, ob bei Schritt 1340 gar keine Bereiche oder Felder entfernt wurden. Ist dies der Fall, werden in Schritt 1030 und 1040 Regeln erzeugt und auf den Retransmitter angewendet.

Andernfalls müssen die verbleibenden Felder oder Bereiche mit den ausgewählten Bereichen vereinigt werden. Hierzu werden in Schritt 1380 die ausgewählten Bereiche auf die verbleibenden Felder oder Bereiche ausgedehnt, wobei auch unmarkierte Felder aufgenommen werden können. Der Schritt verläuft analog zu Schritt 1160 aus Verfahren 1100. Bereiche, die nach diesem Schritt in einem anderen Bereich enthalten sind, können anschließend in Schritt 1190 entfernt werden. Das Verfahren prüft danach erneut, ob die Bereiche nun sämtliche Felder oder Bereiche umfassen (Schritt 1350). Diese Schleife wiederholt sich, bis alle Felder/Bereiche ausgewählt wurden. Die Anzahl dieser Bereiche bleibt nach Schritt 1340 somit konstant; lediglich deren Gestalt ändert sich während der Schleife, sofern erforderlich.

Das Verfahren 1300 kann zusätzlich Optimierungsschritte enthalten, beispielsweise nach dem Reduzierungsschritt 1340 und/oder vor oder nach Schritt 1390. In einem solchen Schritt wird geprüft, ob die Bereiche Überlappungsbereiche aufweisen. Ist ein solcher Überlappungsbereich im Verhältnis zu einem der beiden Bereiche sehr groß, beispielsweise größer als ein vorgegebener Schwellenwert, oder weist einer der Bereiche eine geringe Anzahl nicht überlappender Felder auf, beispielsweise kleiner als ein vorgegebener Schwellenwert, so kann geprüft werden, ob der betreffende Bereich durch einen anderen, bislang nicht ausgewählten, Bereich ersetzt werden kann; beispielsweise kann ein solcher anderer Bereich gewählt werden, wenn er eine größere Anzahl an markierten Feldern umfasst als die nicht überlappende Anzahl markierter Felder in dem zu ersetzenden Bereich.

In den bisher erläuterten Verfahren wurden immer zunächst einzelne markierte Felder ausgewählt und diese anschließend durch Ausdehnung auf andere markierte Felder erstreckt. Dieses Vorgehen kann in sämtlichen Verfahren dahingehend modifiziert werden, dass zunächst ein einzelnes (beliebiges) markiertes Feld ausgewählt wird, dieses anhand angrenzender markierter Felder ausgedehnt wird und erst anschließend ein weiteres markiertes Feld ausgewählt und ausgedehnt wird. Dieser Vorgang wird so lange wiederholt, bis weitere Ausdehnungen nicht möglich sind, ohne auch unmarkierte Felder in die Bereiche aufzunehmen.

Die hier vorgestellten computer-implementierten Verfahren können auf einem Computer oder einem mobilen Gerät mit einem Prozessor und Speicher ausgeführt werden oder allgemein auf einem computerlesbaren Medium mit darauf gespeicherten Befehlen. Die Verfahren können auch direkt auf dem Retransmitter ausgeführt werden. Werden die Verfahren auf einem anderen Gerät durchgeführt, können die erzeugten Regeln mittels Netzwerkverbindung auf den Retransmitter übertragen und dort eingesetzt werden. Beispielsweise ist eine Konfiguration des Retransmitter auch über ein Webinterface oder eine App möglich.

Ausführungsformen der Erfindung umfassen auch eine Implementierung der hier erläuterten Verfahren im Rahmen einer Gebäudeelektronik und können in bestehende Systeme eingebettet sein, mit denen Geräte der Gebäudeelektronik, beispielsweise Aktoren und Sensoren sowie generell Netzwerkgeräte gesteuert und konfiguriert werden. Ein Beispiel für ein System zur Gebäudeautomation ist das KNX-System, das beispielsweise über das Konfigurationstool ETS eingerichtet und gesteuert werden kann.

## Patentansprüche

1. Computer-implementiertes Verfahren zum Konfigurieren eines Retransmitters anhand einer zweidimensionalen Datenstruktur, wobei eine erste Dimension der Datenstruktur Absenderadressen und eine zweite Dimension Zieladressen umfasst und wenigstens einige Felder der Datenstruktur Angaben darüber enthalten, ob eine Datensendung, die von einer der mit dem betreffenden Feld assoziierten Adressen an die andere der beiden Adressen gerichtet ist, durch den Retransmitter weitergeleitet werden soll oder nicht, wobei das Verfahren umfasst:
Auswählen einer Anzahl der Felder, für deren Adressen Datensendungen weitergeleitet werden sollen;
Ausdehnen eines jeweiligen rechteckigen Bereichs um jedes der ausgewählten Felder in der ersten und der zweiten Dimension und jeweils in beide Richtungen, ohne dass der jeweilige rechteckige Bereich ein Feld umfasst, für dessen Adressen Datensendungen nicht weitergeleitet werden sollen;
Erzeugen einer jeweiligen Regel aus den rechteckigen Bereichen, wobei jede der Regeln einen Bereich von Absenderadressen und einen Bereich von Zieladressen definiert, wobei der Bereich der Absenderadressen der Regel durch die Felder in der ersten Dimension und der Bereich der Zieladressen der Regel durch die Felder in der zweiten Dimension des rechteckigen Bereichs bestimmt wird; und
Konfigurieren des Retransmitters mit den erzeugten Regeln.

2. Computer-implementiertes Verfahren nach Anspruch 1, wobei das Auswählen der Felder höchstens so viele Felder umfasst wie eine Anzahl von Regeln, mit denen der Retransmitter eingestellt werden kann, und wobei das Verfahren ferner umfasst:
Nach dem Ausdehnen Bestimmen, ob Felder existieren, für deren Adressen Datensendungen weitergeleitet werden sollen und die in keinem der ausgewählten Felder oder rechteckigen Bereiche enthalten sind;
weiteres Ausdehnen der ausgewählten Felder und/oder der rechteckigen Bereiche auf die bestimmten Felder, wobei auch Felder aufgenommen werden können, deren Datensendungen nicht weitergeleitet werden sollen.

3. Computer-implementiertes Verfahren nach Anspruch 1, wobei das Auswählen der Felder sämtliche Felder umfasst und wobei das Verfahren weiter umfasst.
Nach dem Ausdehnen Bestimmen, ob die Anzahl der ausgewählten Felder und/oder der Bereiche größer ist als die Anzahl der Regeln, mit denen der Retransmitter eingestellt werden kann;
falls die Anzahl größer ist, Bestimmen der Anzahl derjenigen ausgewählten Felder und/oder Bereiche, die die Anzahl der Regeln übersteigt;
weiteres Ausdehnen der ausgewählten größten Bereiche auf die bestimmten Felder und/oder Bereiche, wobei auch Felder aufgenommen werden können, deren Datensendungen nicht weitergeleitet werden sollen.

4. Computer-implementiertes Verfahren nach Anspruch 3, wobei das Bestimmen derjenigen ausgewählten Felder und/oder Bereiche, die die Anzahl der Regeln übersteigt, weiter umfasst:
Bestimmen derjenigen Bereiche, die die kleinste Anzahl an Feldern enthalten.

5. Computer-implementiertes Verfahren nach einem der Ansprüche 2 bis 4, wobei das weitere Ausdehnen umfasst, für jedes der bestimmten Felder denjenigen rechteckigen Bereich oder das ausgewählte Feld zu ermitteln, bei dessen Ausdehnung auf das bestimmte Feld die kleinste Anzahl an Feldern aufgenommen wird, deren Datensendungen nicht weitergeleitet werden sollen.

6. Computer-implementiertes Verfahren nach einem der vorstehenden Ansprüche, wobei das Ausdehnen eines jeweiligen rechteckigen Bereichs ferner umfasst:
Erzeugen eines ersten Bereichs durch Ausdehnen des rechteckigen Bereichs in beide Richtungen der ersten Dimension und Ausdehnen des rechteckigen Bereichs in beide Richtungen der zweiten Dimension;
Erzeugen eines zweiten Bereichs durch Ausdehnen des rechteckigen Bereichs in beide Richtungen der zweiten Dimension und Ausdehnen des rechteckigen Bereichs in beide Richtungen der ersten Dimension; und
Übernehmen desjenigen ersten oder zweiten Bereichs, der eine größere Anzahl an Feldern enthält, für deren Adressen Datensendungen weitergeleitet werden sollen, für das Erzeugen einer jeweiligen Regel.

7. Computer-implementiertes Verfahren nach einem der vorstehenden Ansprüche, ferner umfassend:
Empfangen einer Datensendung an dem Retransmitter;
Prüfen, ob die Absender- und die Zieladresse der Datensendung in einen der Absender- und Zieladressbereiche einer der Regeln des Retransmitters fällt; und
Weiterleiten der Datensendung an deren Zieladresse, wenn die Prüfung positiv ist.

8. Retransmitter, umfassend einen Prozessor , der konfiguriert ist, dass er durch Ausführen von Befehlen das Verfahren nach einem der vorstehenden Ansprüche ausführt.

9. Computerlesbares Medium mit darauf gespeicherten Befehlen, die, wenn sie durch einen Prozessor ausgeführt werden, das Verfahren nach einem der Ansprüche 1 bis 7 durchführen.

## Claims

1. A computer-implemented method for configuring a retransmitter based on a two-dimensional data structure, wherein a first dimension of the data structure comprises sender addresses and a second dimension comprises destination addresses, and at least some fields of the data structure contain indications of whether or not a data transmission directed from one of the addresses associated with the respective field to the other of the two addresses is to be forwarded by the retransmitter, the method comprising:
selecting a number of the fields for whose addresses data transmissions are to be forwarded;
extending a respective rectangular area around each of the selected fields in the first and second dimensions and in both directions, respectively, without the respective rectangular area comprising a field for whose addresses data transmissions are not to be forwarded;
generating a respective rule from the rectangular areas, each of the rules defining a range of sender addresses and a range of destination addresses, wherein the range of the sender addresses of the rule is determined by the fields in the first dimension and the range of the destination addresses of the rule is determined by the fields in the second dimension of the rectangular area; and
configuring the retransmitter with the generated rules.

2. The computer-implemented method of claim 1, wherein the selecting of the fields comprises at most as many fields as a number of rules with which the retransmitter can be set, and wherein the method further comprises:
after the extending, determining whether there are fields for whose addresses data transmissions are to be forwarded that are not contained in any of the selected fields or rectangular areas;
further extending the selected fields and/or the rectangular areas to the determined fields, wherein fields whose data transmissions are not to be forwarded can also be included.

3. The computer-implemented method of claim 1, wherein the selecting of the fields comprises all fields, and wherein the method further comprises:
after the extending, determining whether the number of the selected fields and/or the areas is greater than the number of rules with which the retransmitter can be set;
if the number is greater, determining the number of those selected fields and/or areas that exceeds the number of rules;
further extending the selected largest areas to the determined fields and/or areas, wherein fields whose data transmissions are not to be forwarded can also be included.

4. The computer-implemented method of claim 3, wherein the determining of those selected fields and/or areas that exceeds the number of rules further comprises:
determining those areas that contain the smallest number of fields.

5. The computer-implemented method of any one of claims 2 to 4, wherein the further extending comprises determining, for each of the determined fields, that rectangular area or the selected field whose extension to the determined field includes the smallest number of fields whose data transmissions are not to be forwarded.

6. The computer-implemented method of any one of the preceding claims, wherein the extending a respective rectangular area further comprises:
generating a first area by extending the rectangular area in both directions of the first dimension and extending the rectangular area in both directions of the second dimension;
generating a second area by extending the rectangular area in both directions of the second dimension and extending the rectangular area in both directions of the first dimension; and
adopting that first or second area that contains a greater number of fields for whose addresses data transmissions are to be forwarded for generating a respective rule.

7. The computer-implemented method of any one of the preceding claims, further comprising:
receiving a data transmission at the retransmitter;
checking whether the sender and destination addresses of the data transmission fall within one of the sender and destination address ranges of one of the rules of the retransmitter; and
forwarding the data transmission to its destination address if the check is positive.

8. A retransmitter comprising a processor configured to execute the method of any one of the preceding claims by executing instructions.

9. A computer-readable medium having stored thereon instructions that, when executed by a processor, perform the method of any one of claims 1 to 7.

## Revendications

1. Procédé mis en œuvre par ordinateur pour configurer un retransmetteur à l'aide d'une structure de données bidimensionnelle, une première dimension de la structure de données comprenant des adresses d'expédition et une deuxième dimension comprenant des adresses de destination, et au moins certains champs de la structure de données contenant des informations indiquant si une transmission de données destinée à l'une des adresses associées au champ concerné et dirigée vers l'autre des deux adresses doit être transmise ou non par le retransmetteur, le procédé comprenant :
la sélection d'un certain nombre de champs pour les adresses desquels les envois de données doivent être retransmis ;
l'extension d'une zone rectangulaire respective autour de chacun des champs sélectionnés dans la première dimension et la deuxième dimension et dans les deux directions, sans que la zone rectangulaire respective ne comprenne un champ pour les adresses duquel les envois de données ne doivent pas être retransmis ;
la génération d'une règle respective à partir des zones rectangulaires, chacune des règles définissant une zone d'adresses d'expédition et une zone d'adresses de destination, la zone d'adresses d'expédition de la règle étant déterminée par les champs dans la première dimension et la zone d'adresses de destination de la règle étant déterminée par les champs dans la deuxième dimension de la zone rectangulaire ; et
la configuration du retransmetteur avec les règles générées.

2. Procédé mis en œuvre par ordinateur selon la revendication 1, dans lequel la sélection des champs comprend au maximum autant de champs qu'il y a de règles avec lesquelles le retransmetteur peut être configuré, et dans lequel le procédé comprend en outre les étapes suivantes :
après l'extension, déterminer s'il existe des champs pour les adresses desquels les envois de données doivent être retransmis et qui ne sont contenus dans aucun des champs ou des zones rectangulaires sélectionnés ;
étendre davantage les champs et/ou les zones rectangulaires sélectionnés aux champs déterminés, des champs dont les envois de données ne doivent pas être retransmis pouvant également être inclus.

3. Procédé mis en œuvre par ordinateur selon la revendication 1, dans lequel la sélection des champs comprend tous les champs et dans lequel le procédé comprend en outre les étapes suivantes :
après l'extension, déterminer si le nombre de champs
et/ou de zones sélectionnés est supérieur au nombre de règles permettant de configurer le retransmetteur ;
si le nombre est supérieur, déterminer le nombre de champs et/ou de zones sélectionnés qui dépasse le nombre de règles ;
l'extension supplémentaire des zones sélectionnées les plus grandes aux champs et/ou zones déterminés, en incluant également les champs dont les envois de données ne doivent pas être retransmis.

4. Procédé mis en œuvre par ordinateur selon la revendication 3, dans lequel la détermination des champs et/ou zones sélectionnés qui dépasse le nombre de règles comprend en outre : la détermination des zones qui contiennent le plus petit nombre de champs.

5. Procédé mis en œuvre par ordinateur selon l'une des revendications 2 à 4, l'extension supplémentaire comprenant, pour chacun des champs déterminés, la détermination de la zone rectangulaire ou du champ sélectionné respectif dont l'extension au champ déterminé inclut le plus petit nombre de champs dont les envois de données ne doivent pas être retransmis.

6. Procédé mis en œuvre par ordinateur selon l'une des revendications précédentes, l'extension d'une zone rectangulaire respective comprenant en outre : la génération d'une première zone par extension de la zone rectangulaire dans
les deux directions de la première dimension et l'extension de la zone rectangulaire dans les deux directions de la deuxième dimension ;
la génération d'une deuxième zone par extension de la zone rectangulaire dans
les deux directions de la deuxième dimension et l'extension de la zone rectangulaire dans les deux directions de la première dimension ; et
l'adoption de la première ou de la deuxième zone qui contient le plus grand nombre de champs pour les adresses desquels les envois de données doivent être retransmis pour la génération d'une règle respective.

7. Procédé mis en œuvre par ordinateur selon l'une des revendications précédentes, comprenant en outre :
la réception d'un envoi de données au niveau du retransmetteur ;
la vérification si l'adresse d'expédition et l'adresse de destination de la transmission de données se trouvent dans l'une des
zones d'adresses d'expédition et de destination de l'une des règles du retransmetteur ; et
la retransmission de l'envoi de données à son adresse de destination si la vérification est positive.

8. Retransmetteur comprenant un processeur configuré pour exécuter le procédé selon l'une des revendications précédentes en exécutant des instructions.

9. Support lisible par ordinateur sur lequel sont enregistrées des instructions qui, lorsqu'elles sont exécutées par un processeur, exécutent le procédé selon l'une des revendications 1 à 7.
